# EUROPEAN PATENT APPLICATION

(11) **EP 2 413 600 A2**
(43) Date of publication of application: **01.02.2012**
(21) Application number: 10756360.3
(22) Date of filing: 25.03.2010
(51) Int. Cl.: H04N 7/173, H04N 5/44

(54) **IPTV RECEIVER, AND CONTENT-DOWNLOADING METHOD FOR SAME**

(30) Priority: 25.03.2009 US 163054 P
(71) Applicant: LG Electronics Inc., Seoul 150-721 (KR)
(72) Inventor: KIM, Kyung Ho, Seoul 137-724 (KR); KIM, Jin Pil, Seoul 137-724 (KR); HONG, Ho Taek, Seoul 137-724 (KR); LEE, Joon Hui, Seoul 137-724 (KR)
(74) Representative: Frenkel, Matthias Alexander
(86) International application number: PCT/KR2010/001831
(87) International publication number: WO 2010/110605

(57) **Abstract**

Disclosed are an IPTV, and a content-downloading method for the IPTV. The content-downloading method of the IPTV, according to one embodiment of the present invention, comprises the steps of: accessing an IPTV network and receiving Service Discovery and Selection (SD&S) information containing Open Internet Content Delivery (OICD) service information; parsing the OICD service information to obtain location information of an OICD provider; and accessing the OICD provider via the location information of the OICD provider, wherein said OICD service information contains the location information of the OICD provider which provides network information for downloading content using a peer-to-peer scheme. In addition, the IPTV receiver, according to one embodiment of the present invention, comprises: a network interface which accesses the IPTV network and receives Service Discovery and Selection (SD&S) information containing Open Internet Content Delivery (OICD) service information; a PSI decoder which parses the OICD service information to obtain the location information of the OICD provider; and a service access unit which accesses the OICD provider via the location information of the OICD provider, wherein said OICD service information contains the location information of the OICD provider which provides network information for downloading content using a peer-to-peer scheme.

## Description

### Field of the Invention

The present invention relates to a receiver and method for downloading content over an IPTV network, and more particularly to an IPTV receiver for receiving information regarding a service provider by connecting to a DVB-IPTV network, and downloading content by connecting to a variety of services using the received service provider information, and a method for downloading content of the IPTV receiver.

### Background Art

Existing broadcast receivers have been provided in such a manner that content produced by broadcast stations is transmitted through radio transmission media, such as terrestrial, cable or satellite broadcasting, and the user watches the transmitted content through a broadcast receiver capable of receiving the transmitted content via the respective transmission media. However, as digital broadcast technologies based on digital broadcasting are developed and become commercially available, breaking from existing analog broadcasting, various types of content services, such as real-time broadcasts, Contents on Demand (CoD), games and news, can be provided to the user using the Internet network connected to each home, besides the existing transmission media or cable media. An Internet Protocol TV (IPTV) may be taken as an example of the provision of content services over the Internet. The IPTV refers to a service that transmits and provides various information services, moving image content, broadcast content, etc. to the user's receiver (e.g., TV) over the Internet.

The IPTV provides broadcast content and video data to the user's receiver in the same manner as in general terrestrial broadcasting, cable broadcasting or satellite broadcasting. Differently from general terrestrial broadcasting, cable broadcasting or satellite broadcasting, bidirectionality or interactivity can be additionally provided to the IPTV, such that the user can watch data of a desired content service at his or her convenience. The IPTV can provide the user with detailed information, connection position, service provider information, service channel, etc. of respective contents using a content guide service.

However, the IPTV is unable to avoid traffic concentration of a content provider, and such traffic concentration decreases the speed of content provision and a transfer rate of content and also deteriorates a quality of service (QoS).

### Detailed Description of the Invention

### Technical Problem

An object of the present invention is to provide an IPTV receiver that receives content from a server or other broadcast receiver using a Peer-to-Peer (P2P) scheme, distributes network traffic, thereby providing more efficient and convenient broadcast environments to a user.

### Technical Solution

The object of the present invention can be achieved by providing a method for downloading content by an IPTV receiver including receiving SD&S (Service Discovery and Selection) information including OICD (Open Internet Content Delivery) service information by connecting to an IPTV network; obtaining location information of an OICD provider by parsing the OICD service information; and connecting to the OICD provider through the location information of the OICD provider, wherein the OICD service information includes location information of the OICD provider that provides network information capable of downloading content using a peer-to-peer (P2P) scheme.

In another aspect of the present invention, an IPTV receiver includes a network interface for receiving SD&S (Service Discovery and Selection) information including OICD (Open Internet Content Delivery) service information by connecting to an IPTV network; a PSI (Program System Information) decoder for obtaining location information of an OICD provider by parsing the OICD service information; and a service access unit for connecting to the OICD provider through the location information of the OICD provider, wherein the OICD service information includes location information of the OICD provider that provides network information capable of downloading content using a peer-to-peer (P2P) scheme.

### Effects of the Invention

As apparent from the above description, exemplary embodiments of the present invention have the following effects. The IPTV receiver can download a variety of contents using a Peer-to-Peer (P2P) scheme. In other words, the IPTV receiver can download CoD and real-time broadcast content using the P2P scheme, such that network efficiency is considerably increased whereas traffic concentration is considerably decreased in terms of the service provider. From the viewpoint of the user, a content downloading path can be effectively managed such that the content reception speed and system efficiency are greatly increased.

### Brief Description of the Drawings

FIG. 1 shows file delivery architectures of an IPTV network and a P2P network according to one embodiment of the present invention.

FIG. 2 shows a process for receiving SD&S information of a DVB-IPTV receiver according to one embodiment of the present invention.

FIG. 3 shows network architecture of an Open Internet Content Delivery (OICD) service according to one embodiment of the present invention.

FIG. 4 shows SD&S record according to one embodiment of the present invention.

FIG. 5 shows SD&S record according to another embodiment of the present invention.

FIG. 6 shows OICD service discovery payload according to one embodiment of the present invention.

FIG. 7 shows OICD discovery type information according to one embodiment of the present invention.

FIG. 8 shows a process for enabling an IPTV receiver to log in to an OICD provider according to one embodiment of the present invention.

FIG. 9 shows a process for enabling an IPTV receiver to request an OICD service from an OICD provider according to one embodiment of the present invention.

FIG. 10 shows a process for enabling an IPTV receiver to request an OICD service menu from the OICD provider according to one embodiment of the present invention.

FIG. 11 shows a process for enabling an IPTV receiver to request an OICD service menu from the OICD provider according to one embodiment of the present invention.

FIG. 12 shows a structure of SD&S information when OICD discovery information is contained in SD&S information and the resultant SD&S information is signaled according to one embodiment of the present invention.

FIG. 13 shows a structure of SD&S information when OICD discovery information is contained in SD&S information and the resultant SD&S information is signaled according to another embodiment of the present invention.

FIG. 14 is a flowchart illustrating an OICD service discovery process according to one embodiment of the present invention.

FIG. 15 shows a user interface (UI) for providing OICD provider information according to one embodiment of the present invention.

FIG. 16 shows a user interface (UI) for providing information of the OICD provider service according to one embodiment of the present invention.

FIG. 17 shows XML format data of a main menu that is transmitted to provide menus of the OICD provider shown in FIG. 16 according to one embodiment of the present invention.

FIG. 18 shows XML format data of content information that is transmitted to provide content information of the OICD provider shown in FIG. 16 according to one embodiment of the present invention.

FIG. 19 is a flowchart illustrating a process for enabling the receiver to generate hash codes as well as to register content according to one embodiment of the present invention.

FIG. 20 is a conceptual diagram illustrating a process for generating hash codes according to one embodiment of the present invention.

FIG. 21 shows a structure of OICD type information transmitted through content searching of the receiver according to one embodiment of the present invention.

FIG. 22 is a block diagram illustrating an IPTV receiver according to one embodiment of the present invention.

FIG. 23 is a flowchart illustrating a method for downloading content of an IPTV receiver according to one embodiment of the present invention.

### Best Mode for Carrying Out the Invention

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention.

Prior to describing the present invention, it should be noted that most terms disclosed in the present invention are defined in consideration of functions of the present invention and correspond to general terms well known in the art, and can be differently determined according to intention of those skilled in the art, usual practices, or introduction of new technologies. In some cases, a few terms have been selected by the applicant as necessary and will hereinafter be disclosed in the following description of the present invention. Therefore, it is preferable that the terms defined by the applicant be understood on the basis of their meanings in the present invention.

The IPTV service uses the centralized file distribution scheme. In other words, if each reception terminal is notified of the location of content, each reception terminal connects to an access-allowed server and receives services and content from the server. If the IPTV service is provided to each reception terminal as described above, network traffic is unavoidably concentrated on the server including content. Therefore, the present invention provides a method for reducing the amount of network traffic and effectively transmitting data including content.

A method for transmitting and receiving data over a P2P network during the IPTV service according to the present invention will hereinafter be described with reference to the attached drawings. The IPTV receiver, the DVB-IPTV receiver, and the IPTV network will hereinafter be described as representative examples of the present invention. For convenience of description, the IPTV receiver may also be called a DVB-IPTV receiver, a receiver, Home Network End Device (HNED), an IPTV Terminal Function (ITF), a peer, etc.

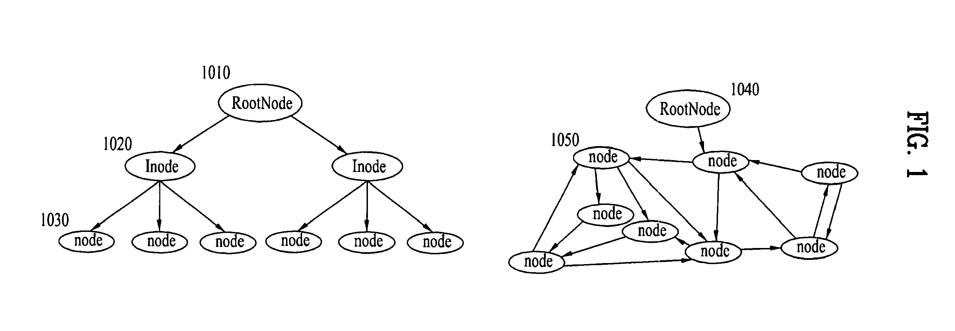

FIG. 1 shows file delivery architectures of an IPTV network and a P2P network according to one embodiment of the present invention.

Referring to FIG. 1, the root node 1010 or 1040 may represent a server having an original file. The Inode 1020 may represent a relay server for file distribution, and each node 1030 may represent a peer. The peer for use in a network may indicate a reception terminal such as an IPTV receiver.

The left part of FIG. 1 shows file delivery architecture of the IPTV network. In FIG. 1, each node 1030 connects to the root node 1030 to which a file is provided through the Inode 1020 acting as a distribution server, thereby receiving the file. Therefore, as the number of nodes increases, traffic load and bottleneck for the Inode and the root node become serious, resulting in deterioration of a transfer rate and quality.

The right part of FIG. 1 shows file delivery architecture of the P2P network. The P2P network transmission scheme enables nodes 1050 to directly access the bottom of one root node 1040 so as to transmit files. Each file, that has been transmitted once, is configured to aid mutual transmission between nodes. Therefore, if the file is transmitted from the root node to each node, each node is used as the Inode, resulting in distribution of network traffic.

In order to allow a user equipment (UE) to access a virtual network such as P2P, the UE connects to a predetermined P2P tracker address through application capable of accessing a specific P2P network. The P2P network implements file sharing through P2P logical connection. Accordingly, it is necessary for the P2P network to connect to the P2P tracker so as to implement P2P connection.

The P2P tracker acts as a server for constructing the P2P network. The P2P tracker may be considered to be a database (DB) that includes an IP address of the peer, port information, and index information of version and sharing files of the P2P application. Therefore, the peer may share files using the P2P network by connecting to the P2P tracker, and the P2P tracker address should be pre-established in the peer.

The peer is a basic unit for constructing the P2P network. A variety of broadcast devices, a reception terminal, etc. may correspond to the peer according to the network. In accordance with one embodiment of the present invention, an IPTV receiver, a DVB-IPTV receiver, a computer, etc. may correspond to the peer. There is high probability that share data is increased in proportion to the number of peers constructing the P2P network. Each peer connects to the P2P tracker such that its own access information (e.g., IP address, port information, P2P application version information, etc.) is transferred to the P2P tracker and peers that attempt to connect to the P2P tracker. Therefore, each peer can easily communicate with others according to a communication protocol, and data transmission can be effectively achieved. It may be possible to use one peer that is capable of directly accessing some or all of files in response to the peer, and it may also be possible to use the other peer that is capable of downloading files from other peers over the P2P network when there may be some or all of files.

The IPTV receiver has to connect to the P2P tracker for providing information about the P2P network so as to use the above-mentioned P2P network. For this operation, the IPTV has to receive information of the P2P tracker. The IPTV receiver is basically connected to the centralized network, and receives information of a service to be used by the receiver and information how to receive the service. The above-mentioned operation of the IPTV receiver is called a Service Discovery and Selection (SD&S). The DVB-IPTV system is designed to use the distribution and reception scheme of the SD&S information through multicast or unicast.

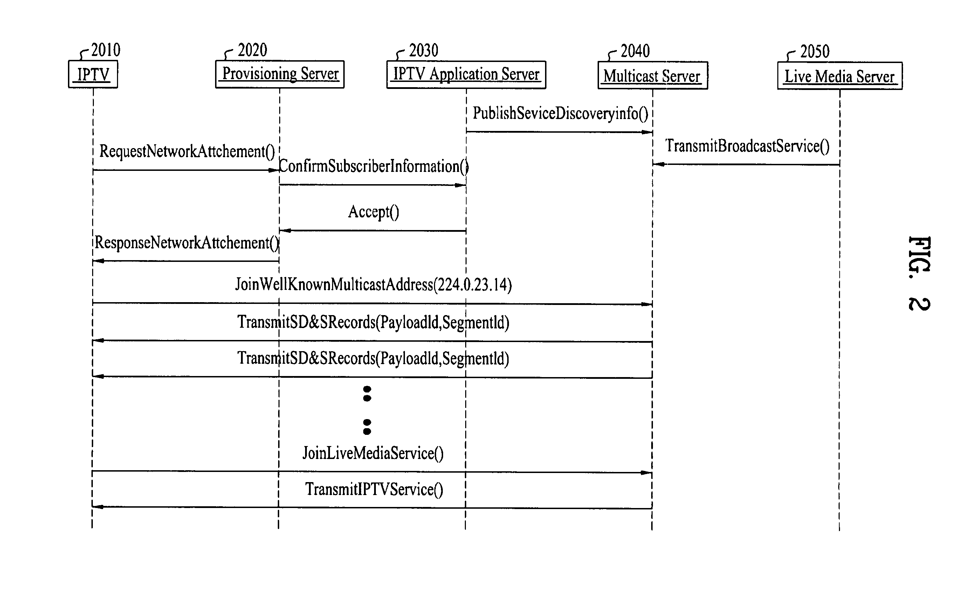

FIG. 2 shows a process for receiving SD&S information of a DVB-IPTV receiver according to one embodiment of the present invention.

Referring to FIG. 2, the IPTV 2010 is present in a consumer domain, and may correspond to a set-top box, an IPTV receiver, etc. requisite for the user who desires to use the IPTV service. In addition, a provisioning server 2020, an IPTV application server 2030, a multicast server 2040, a LiveMediaServer 1050, etc. may be devices that are provided from the IPTV service provider.

When the system starts operation, the IPTV receives configuration information to access the network through the provisioning server 2020, such that it authenticates service provision. If a normal user or device is authenticated, the IPTV connects to the network. The service provider uses a variety of methods to provide the IPTV 2010 with SD&S information, and a representative method is a method for transmitting SD&S information over a multicast channel. If the multicast channel is used, the same information can be effectively transmitted to and managed by many IPTV receivers, resulting in reduction of network traffic. The information transmission scheme over the multicast channel may also be used when live media streaming is used.

In order to transmit SD&S information over the multicast channel, this SD&S information is transmitted over the multicast server 2040. It is necessary for data to be transmitted to the IPTV 2010 to be updated to the latest version in the multicast server 2040. If the IPTV application server 2030 transmits SD&S information to the multicast server 2040, the multicast server 2040 generates a well-known multicast channel and transmits SD&S information over the well-known multicast channel. If the IPTV receiver normally connects to the network, it attempts to connect to the well-known multicast channel so as to receive SD&S information. If the received SD&S information is recovered to normal data, then the IPTV service can be provided to the user. Although a current channel is switched to another channel, the user can recognize which multicast channel is switched, such that the IPTV service can be provided to the user.

As described above, SD&S information reception over the IPTV network is of importance to search for a service available to the IPTV receiver. Therefore, in order to use the P2P network, information regarding the P2P network is contained in SD&S information, the resultant SD&S information is transmitted, there is needed a method for allowing the IPTV receiver to connect to the P2P network and transmit a transmission request to the P2P network.

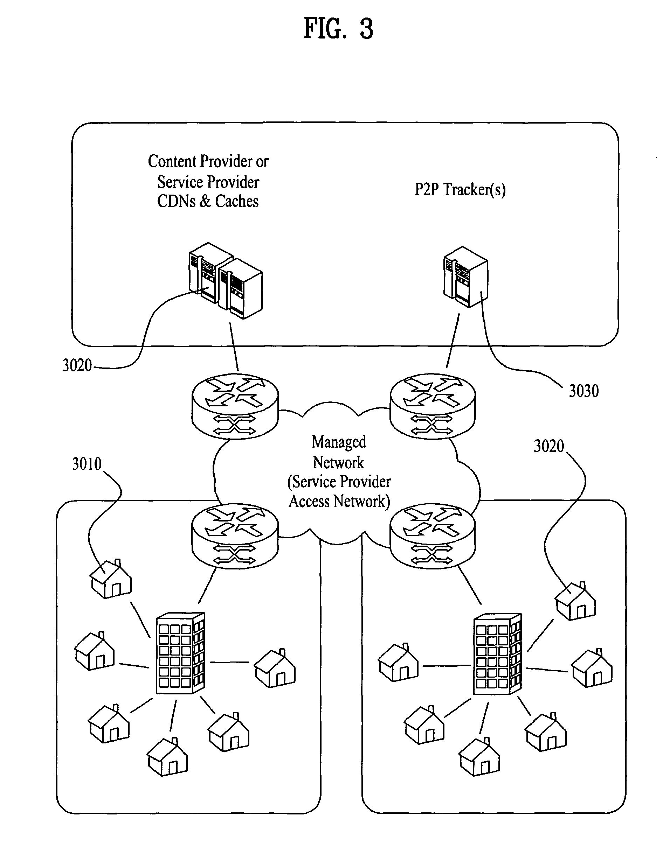

FIG. 3 shows network architecture of an Open Internet Content Delivery (OICD) service according to one embodiment of the present invention.

Referring to FIG. 3, the OICD service means a specific service that is capable of additionally providing the P2P service over the IPTV network. The following description of the OICD service network and the OICD service relates to a network environment in which the IPTV network and the P2P network are used, as well as to services for the network environment. In addition, the OICD provider may be conceptually identical to the P2P tracker.

In FIG. 3, the IPTV receiver 3010 may directly receive content from the content provider or the service provider 3020. The IPTV receiver 3010 may connect to the P2P tracker 3030 so as to use the P2P network, and may receive content from another IPTV receiver 3020.

In the OICD service network, the service provider may directly operate the P2P tracker so as to perform content distribution through the P2P service, and may transmit associated information to the receiver through the SD&S information.

In the OICD service network, the content provider may operate the P2P tracker without the aid of the service provider, or may entrust another P2P tracker provider with management.

The service provider or the content provider may directly manage the P2P tracker. In addition, content received from the service provider or the content provider may be provided to the user through P2P connection.

As a method for searching for the above-mentioned OICD service, i.e., as a method for performing OICD service discovery, one embodiment of the present invention provides a method for containing P2P service discovery information in service discovery information of the IPTV system, and then transmitting the resultant information. If the P2P service discovery information is contained in the service discovery information of the IPTV system and the resultant service discovery information is transmitted, the following effects 1) and 2) can be obtained.

In the first effect (1), the IPTV system can select whether to transmit the IPTV service either using an RTP protocol acting as the legacy scheme or using P2P transmission. RTP may be used to provide live media streaming and CoD (Content on Demand) services. The P2P service may be more effectively used when downloading CoD.

In the second effect (2), contents, such as live media streaming and CoD, present in the open Internet may be downloaded using the P2P transmission technology.

In one embodiment of the present invention, OICD service discovery information is contained in SD&S information (or SD&S record) to maximally utilize the above-mentioned effects, such that the resultant SD&S information may be transmitted to the receiver.

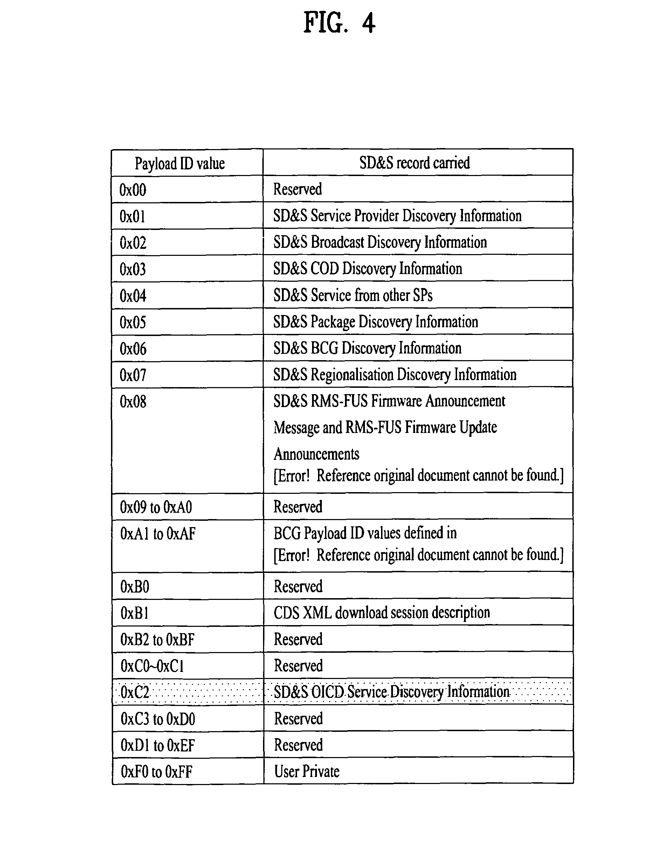

FIG. 4 shows SD&S record according to one embodiment of the present invention.

In FIG. 4, SD&S payload ID of the OICD service discovery information is assigned '0x02'. Hereinafter, the OICD service discovery information may be called OICD discovery information. In this case, the OICD discovery information may conceptually cover OICD service information and OICD provider information.

In order to allow the IPTV receiver to acquire OICD service provider information and P2P tracker information, the IPTV receiver may receive the SD&S record shown in FIG. 4. When the IPTV receiver receives data over a multicast channel in the same manner as in other service discovery payload, the IPTV receiver may follow the syntax of the DVBSTP protocol as necessary.

When using a unicast channel, OICD discovery payload may be obtained using the following HTTP Get Request.

| |
|---|
| **'GET /dvb/sdns service_discovery?id=dacom.cam&Payloadld=C2 HTTP/1.1* CRLF** |

In other words, the IPTV receiver may directly designate and receive specific payload.

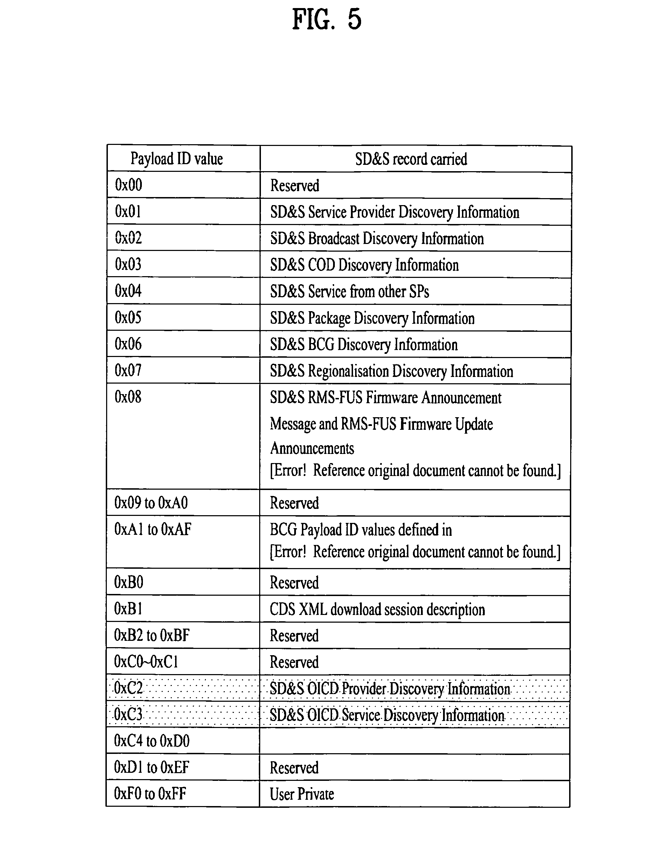

FIG. 5 shows SD&S record according to another embodiment of the present invention.

In FIG. 5, additional payload ID is assigned such that P2P provider information and P2P service information may be separated from each other and then received in the IPTV receiver. That is, a payload ID "0x02" may be assigned to payload including information regarding the OICD provider, and a payload ID "0x03" may be assigned to payload including information regarding the OICD service. The payloads including the payload IDs shown in FIG. 5 may be divided on a segment basis and then transmitted.

As can be seen from FIG. 5, information regarding the OICD provider and information regarding the OICD service are separated from each other according to each payload ID, such that the receiver may receive only necessary payload. In this case, the IPTV receiver may directly designate and receive desired information, whereas it has difficulty in predicting reception information when only one payload ID is used. For example, only one of OICD provider discovery information and OICD service discovery information may be transmitted.

As can be seen from FIG. 5, if separate payload ID is assigned to the OICD provider discovery information and the OICD service discovery information, the IPTV receiver for use in unicast transmission may receive the OICD provider discovery payload using the following HTTP Get Request.

| |
|---|
| **'GET /dab/sdns servite_distovery?id=dacom.cam&Payloadld=C2 HTTP/1.1' CRLF** |

In case of receiving OICD service discovery payload, the IPTV receiver has to receive the OICD service discovery payload by increasing a segment ID. The scope or spirit of the present invention is not limited thereto, and a payload ID may be assigned "0x03" such that the payload ID "0x03" may be received in the IPTV receiver.

| |
|---|
| **'GET /dvb/sdns service_distavery?td=dacom.com&Payloadid=C3 HTTP/1.1' CRLF** |

The above-mentioned method may be highly available to one case in which there are a large amount of P2P provider information or the other case in which there are a large amount of P2P service information and the IPTV receiver has difficulty in receiving data simultaneously while increasing a segment ID.

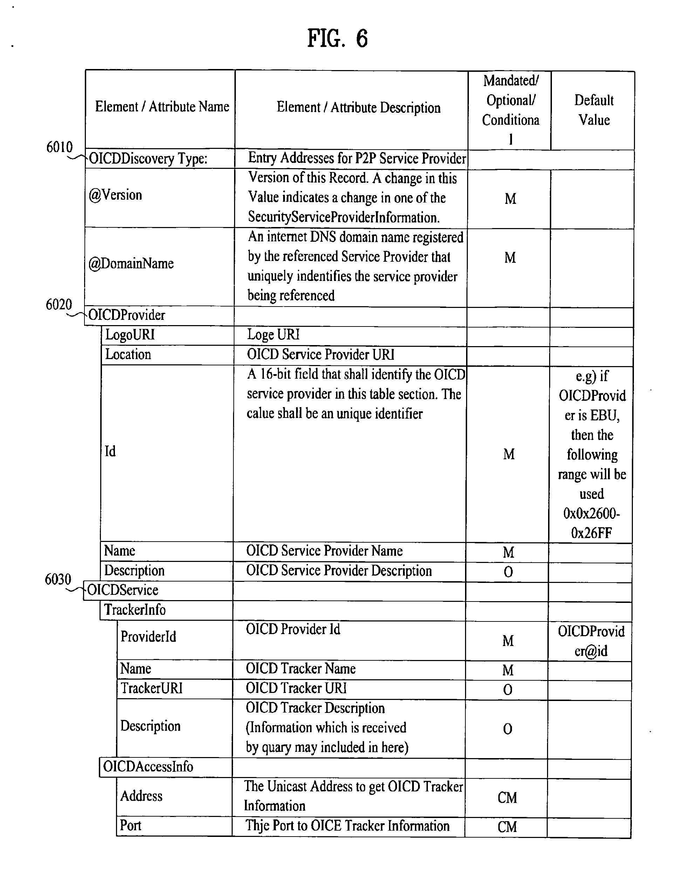

FIG. 6 shows OICD service discovery payload according to one embodiment of the present invention.

Referring to FIG. 6, the OICD service discovery payload basically includes three information, i.e., OICD discovery type information 6010, OICD provider information 6020, and OICD service information 6030.

The OICD discovery type information 600 includes version information and domain name information regarding the service provider. The version information may indicate version information of payload. The IPTV receiver compares the received P2P service discovery information with previously received information, such that it can determine whether or not the received information is the latest information.

The OICD provider information 6020 includes information regarding the OICD service provider. For example, the OICD provider may provide a logo to be displayed on the screen and a location Uniform Resource Identifier (URI). The OICD provider may provide the IPTV receiver with additional information and functions using the location URI. In one embodiment, in the case where the IPTV receiver obtains OICD provider information 6020 and logs in (or signs in) to the OICD provider, and transmits information required for downloading files, the OICD provider may provide information about peers including associated files. In addition, the IPTV receiver receives and updates a new OICD service (or the list of trackers providing such service) provided from the OICD provider. The user may directly select the OICD provider or automatic connection is achieved according to configuration information of the receiver such that P2P communication may be achieved.

The OICD service information 6030 may include information about a tracker capable of receiving the OICD service. If the OICD provider further provides OICD service information, the receiver may attempt to connect to the P2P service using an address contained in the OICD service information. The OICD service information 6030 includes a title of each tracker and a connection URI of a tracker providing the OICD service. The URI of the tracker may be used as a log-in process in the same manner as in the OICD provider location. In some embodiments, the URI of the tracker may be used to check a current tracker state, search for a desired file, and confirm the search result. In one embodiment, before the receiver connects to the tracker, OICDAccessInfo information may include an OICD tracker connection address and associated detailed explanation, such that the user can select the P2P tracker. If the receiver is automatically connected to the tracker, the corresponding information may be displayed on the screen. The OICDAccessInfo information may include the list of tracker addresses to which the receiver can approach such that necessary data is retrieved. The OICD provider constructs and manages one or more trackers. In addition, the OICD provider may have different service trackers or different tracker access addresses according to content characteristics. In addition, the OICD provider may provide the list of trackers that are managed by a specific content provider company or a third party company.

The OICD provider may include one or more OICD services. Otherwise, the OICD provider may obtain OICD service information using OICD provider information according to the unicast communication.

The OICD service discovery payload shown in FIG. 6 is disclosed only as an example of the embodiment shown in FIG. 4. If necessary, the OICD provider information and the OICD service information may be constructed as separate payload in the same manner as in FIG. 5.

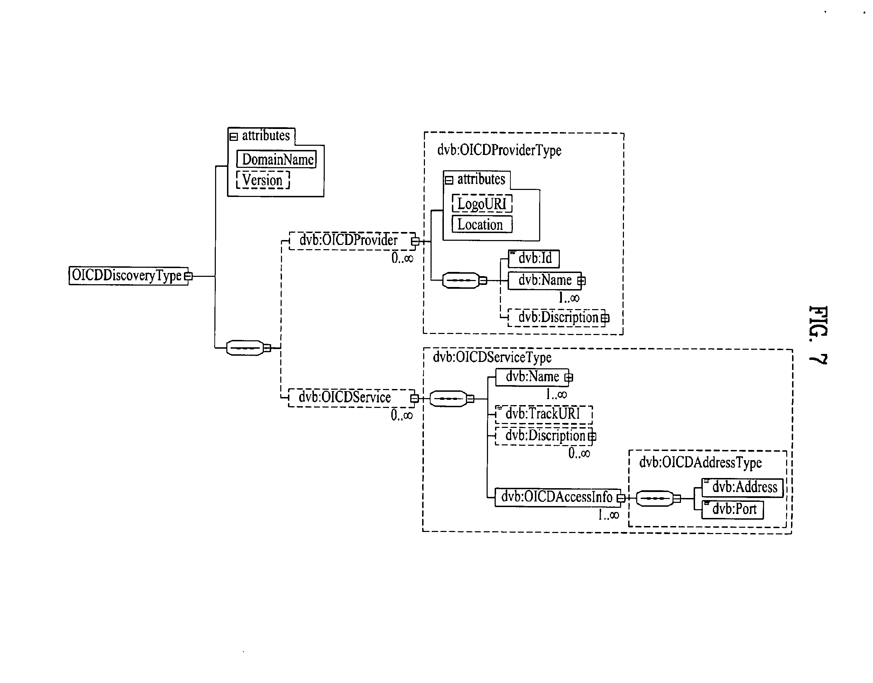

FIG. 7 shows OICD discovery type information according to one embodiment of the present invention.

FIG. 7 hierarchically shows the payload of FIG. 6.

A method for enabling the IPTV receiver to use the P2P service using information pieces contained in the OICD service discovery information shown in FIGS. 6 and 7 will hereinafter be described in detail.

(1) Log in (Sign in)

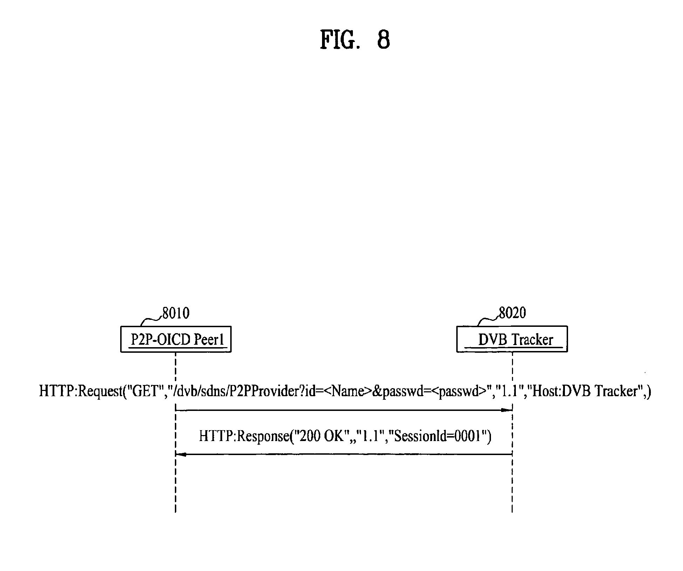

FIG. 8 shows a process for enabling an IPTV receiver to log in to an OICD provider according to one embodiment of the present invention.

Referring to FIG. 8, the P2P-OICD peer1 8010 is an IPTV receiver, the DVB tracker 8020 is a P2P provider for providing the P2P network. If necessary, the DVB tracker 8020 may correspond to the service provider or the OICD provider.

The receiver may require the log-in or sign-in process so as to access the OICD provider. Specifically, if the service provider provides a differentiated service according to the user, the receiver has to perform the above-mentioned log-in or sign-in process. In this case, a user authentication procedure may be carried out through the HTTP protocol.

| |
|---|
| **GEr /dvb/sdnslP2PProviderid=<MySubscriptionName or UserName>&passwd=cpasswd> &Modelld=<Manufacturprtvtpdelld>_.** |
| **Host: <location>** |

That is, as shown in FIG. 8, if information regarding a user who currently desires to connect and information regarding the receiver are transmitted to the OICD provider using the HTTP protocol for the location URI of the provider obtained in FIGS. 4 to 7, the OICD provider is assigned a session ID, the receiver can communicate with the OICD provider using the session ID.

(2) Request of OICD service

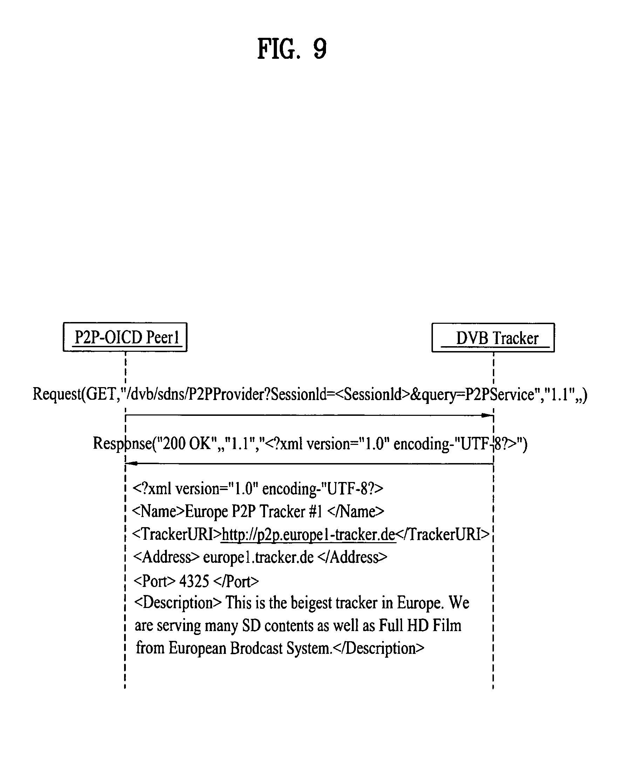

FIG. 9 shows a process for enabling the IPTV receiver to request the OICD service from the OICD provider according to one embodiment of the present invention.

Referring to FIG. 9, the OICD provider can update information regarding the tracker. In this case, if the receiver transmits the following OICD service request to the location URI of the OICD provider, the OICD provider transmits tracker information to the receiver.

| |
|---|
| **GET /dvb/sdru/P2PFrovider?Sesnontd=<Sesslonld>&.query=OICDService** |
| **Host: <location>** |

If the receiver transmits the above-mentioned OICD service request, the OICD provider transmits the following tracker information to the receiver using XML (extensible markup language).

| |
|---|
| **HTTP/1.1 200 OK** |
| **Date: Tue.10 Mar 2009 07:40:27 GMT** |
| **Content-Type: text/xml** |
| **<?mil version"1.0" encoding-"UTF-8?>** |
| **<Name> Europe P2P Tracker #1 </Name>** |
| **<TrackerURl> http://p2p.europel-ttacker.de </TrackerURl>** |
| **<Address> europe1.trarker.de </address>** |
| **<Port> 4325 </Port>** |
| **<Description> This is the belgest tradter in Europe. We are serving many SD contents as well as Full HD Film fromEuropeanBroadcastSyrstem.</Descriptian>** |

Information about the tracker transmitted from the OICD provider may be changed according to the XML format. However, as described in the above-mentioned embodiment, the tracker information may include a tracker URI, tracker title, address and port information.

(3) Request of OICD service menu

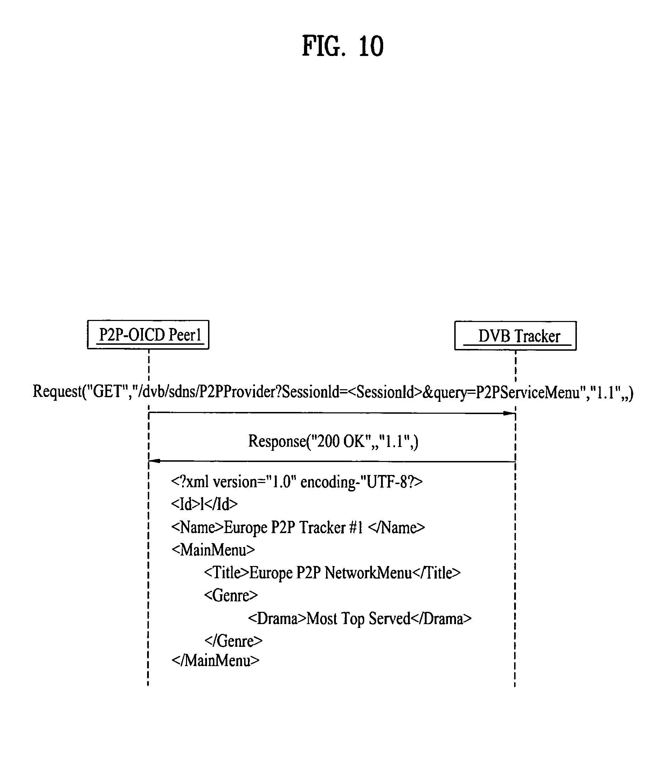

FIG. 10 shows a process for enabling the IPTV receiver to request an OICD service menu from the OICD provider according to one embodiment of the present invention.

The receiver may request the service menu managed by the OICD provider as the location URI of the OICD provider. In this case, the OICD provider may transmit the service menu including providable content to the receiver.

| |
|---|
| **GET/dvb/sdns/P2PProvider?Sessionld=cSenionld>&query=OICDServIceMenu** |
| **Host**: **<location>** |

Menu data may be transmitted in the form of XML or XHTML (extensible hypertext markup language). In one embodiment, when the user selects the OICD provider from the menu, the receiver may request menu data from the OICD provider. If the menu data is received in the XML form, the receiver may display menu data on the screen. If the menu data is received in the XHTML form, the OICD provider may display a desired image on the screen.

Since the receiver can request the OICD service menu from one or more OICD providers, different OICD networks can be discriminated from one another using the same structure as in FIG. 10.

(4) Search Content

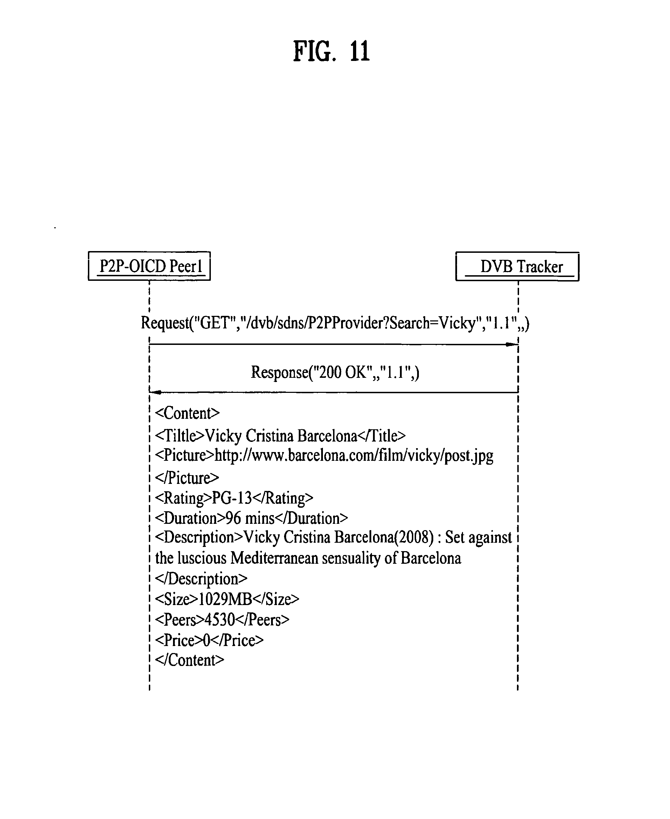

FIG. 11 shows a process for enabling the IPTV receiver to request an OICD service menu from the OICD provider according to one embodiment of the present invention.

In one example, the user may search for data using a specific keyword through the receiver, or keywords frequently used by the user are registered in the receiver according to setting or configuration, such that automatic searching may be performed through the receiver. In addition, in some embodiments, even in the case of using Broadband Content Guide (BCG) or CoD, the receiver queries the tracker URI of the P2P service for keywords or sentences corresponding to the title or the like, such that it can download additional content.

| |
|---|
| **GET/dvb/sdns/P2PService?Search=[keyword1] ";" ["and", "or", "not"] ";" ...";" [keywordn]** |
| **Host: <TrackerURI>** |

If the above-mentioned search query is transmitted form the receiver through the tracker URI, the tracker searches for information corresponding to keywords and transmits the retrieved information to the receiver. In one embodiment, information transmitted from the tracker is transmitted in the form of the P2P protocol, and the resultant information is processed by the OICD application (or P2P application), such that the processed result may be provided to the user through the screen.

(5) Request of Tracker Statistics

In one embodiment, the receiver may request information indicating how much contents or peers are currently managed by the tracker. If the receiver transmits the request of tracker statistics to the tracker URI, the tracker may transmit the currently-connected user, content types, summary information of each content, etc. to the receiver.

| |
|---|
| **GET /dvb/sdns/P2PService?query=TrackerStatistics** |
| **Host: <TrackerURI>** |

The SD&S information structure for OICD discovery information contained in SD&S information will hereinafter be described in detail.

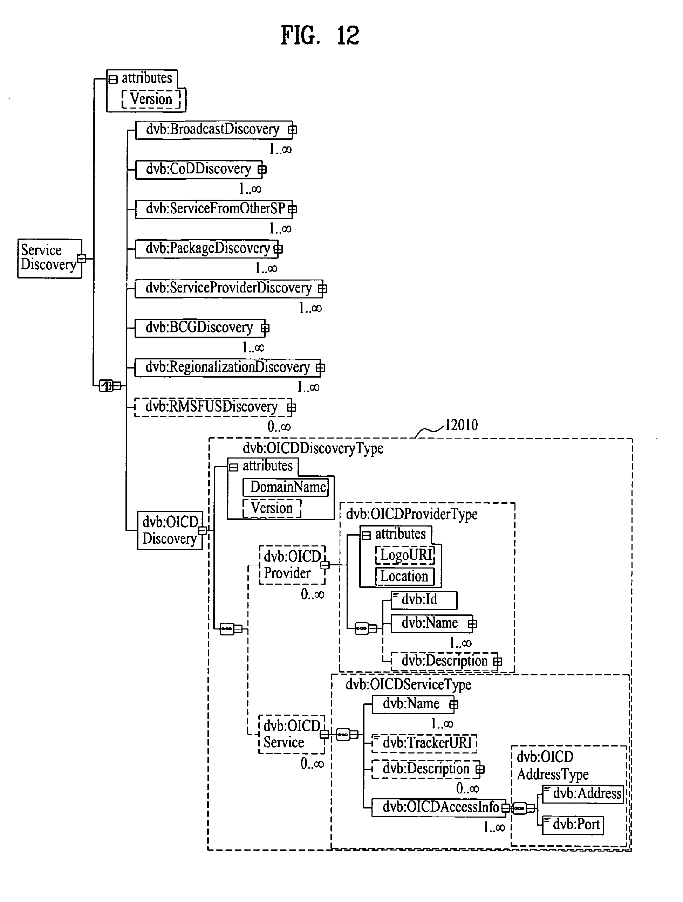

FIG. 12 shows a structure of SD&S information when OICD discovery information is contained in SD&S information and the resultant SD&S information is signaled according to one embodiment of the present invention.

SD&S information of FIG. 12 corresponds to the SD&S record shown in FIG. 4. The SD&S information of FIG. 12 is shown as OICD service discovery information in FIG. 4. In the present invention, in the case where OICD service information and OICD provider information are transmitted as one payload as shown in FIGS. 4 and 12, SD&S information for use in the present embodiment may be referred to as OICD discovery information 12010.

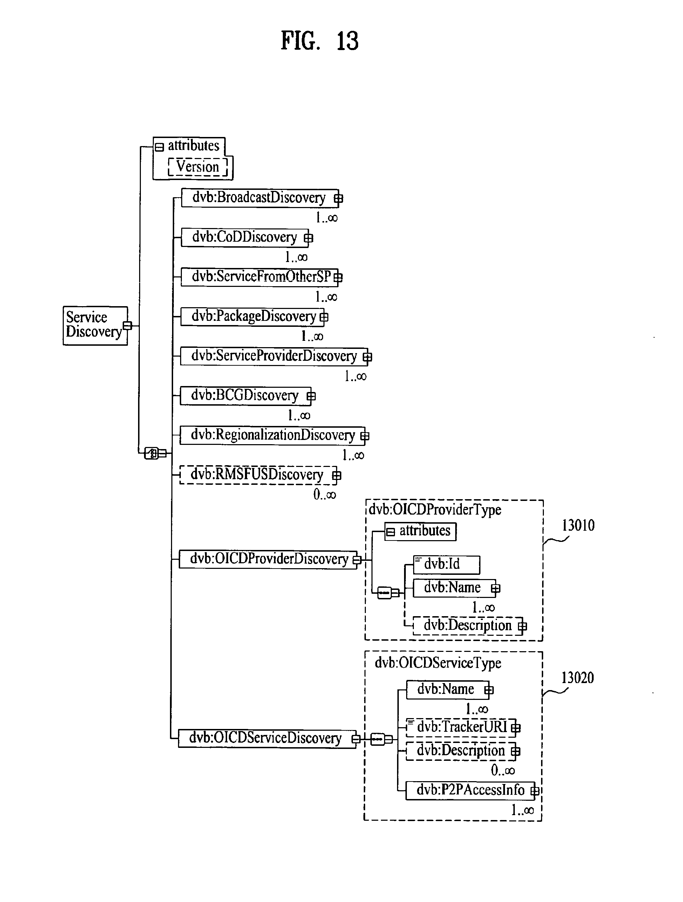

FIG. 13 shows a structure of SD&S information when OICD discovery information is contained in SD&S information and the resultant SD&S information is signaled according to another embodiment of the present invention.

SD&S information of FIG. 13 may correspond to the SD&S record shown in FIG. 5. Differently from FIGS. 12 and 4, the embodiment of FIG. 13 can classify OICD discovery information into different payloads, i.e., OICD provider discovery information 13010 and OICD service discovery information 13020, such that the OICD discovery information may be transmitted as different payloads.

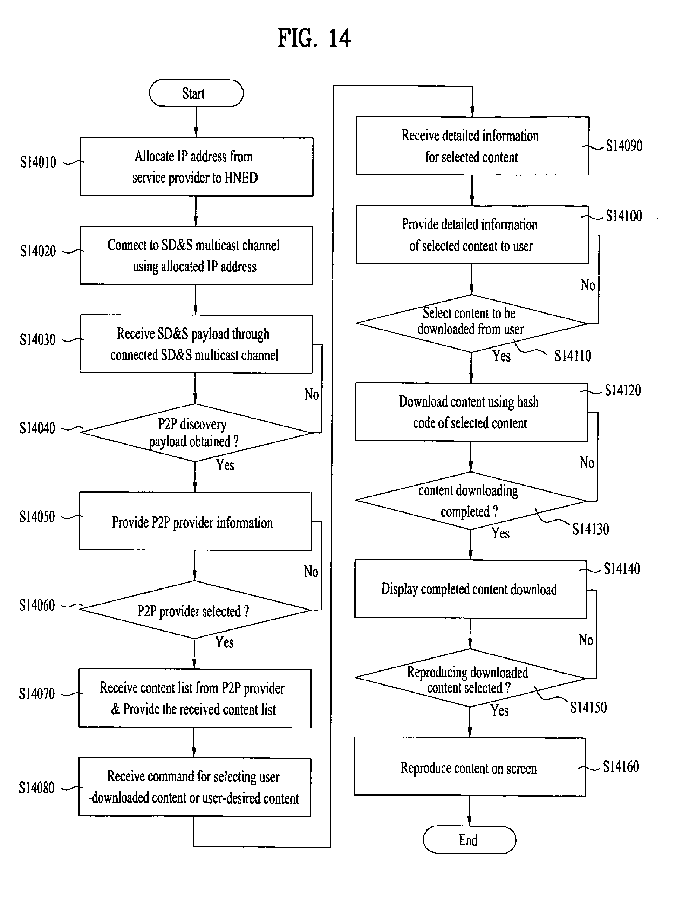

FIG. 14 is a flowchart illustrating an OICD service discovery process according to one embodiment of the present invention.

Referring to FIG. 14, the IPTV receiver may be referred to as a Home Network End Device (HNED) or IPTV Terminal Function (ITF) in association with FIG. 14.

Referring to FIG. 14, the receiver connects to the IPTV network and receives an IP address from the service provider at step S14010. The receiver connects to the SD&S multicast channel using the assigned IP address at step S14020. The receiver receives SD&S payload through the connected SD&S multicast channel at step S14030. The process for enabling the receiver to receive SD&S payload through the SD&S multicast channel has already been disclosed with reference to FIG. 2.

The receiver obtains P2P discovery payload (OICD discovery payload) from the received SD&S payload at step S14040. The receiver can request and receive P2P discovery payload through the unicast channel as previously stated above.

The receiver parses the received OICD discovery payload and provides information regarding the P2P (OICD) provider at step S14050. In one embodiment, the receiver may display title, logo, and description information of the P2P provider on the screen.

If the user selects the P2P provider that provides a user-desired P2P network at step S14060, the receiver connects to the selected P2P provider, receives the list of providing contents, and provides the received list at step S14070. The receiver may display the list of contents received from the P2P provider on the screen.

The receiver receives a command for selecting user-downloaded content or user-desired content from among the content list at step S14080.

The receiver receives detailed information of the selected content from the P2P provider at step S14090. In one embodiment, the received content information may include content title information, content description information, content type information, hash code information of content, content quality information such as a content image quality, size information of content, and connection information of peer(s) capable of receiving the corresponding content. For example, provided that content is a moving image file, the received content information may include a variety of attributes, for example, an image quality (SD, HD, etc.), a file size, each peer including content, content language, etc. Each content or each content group may be identified by unique hash code information. Peer information of each peer including content may include peer location information (URI, IP address, port information, or the like). The receiver may connect to a peer that is capable of downloading the selected content using this peer information.

The receiver may provide detailed information associated with the selected content to the user at step S14100. Likewise, the receiver may display the received detailed information on the screen.

If the receiver receives a content selection command from the user at step S14110, the receiver downloads the selected content using a hash code of the selected content at step S14120.

If content is completely downloaded at step s14130, the receiver displays information indicating the completed downloading for a predetermined time at step S14140. If the user selects content displayed on the P2P download scheduler at step S14050, the receiver plays the content on the screen at step S14060.

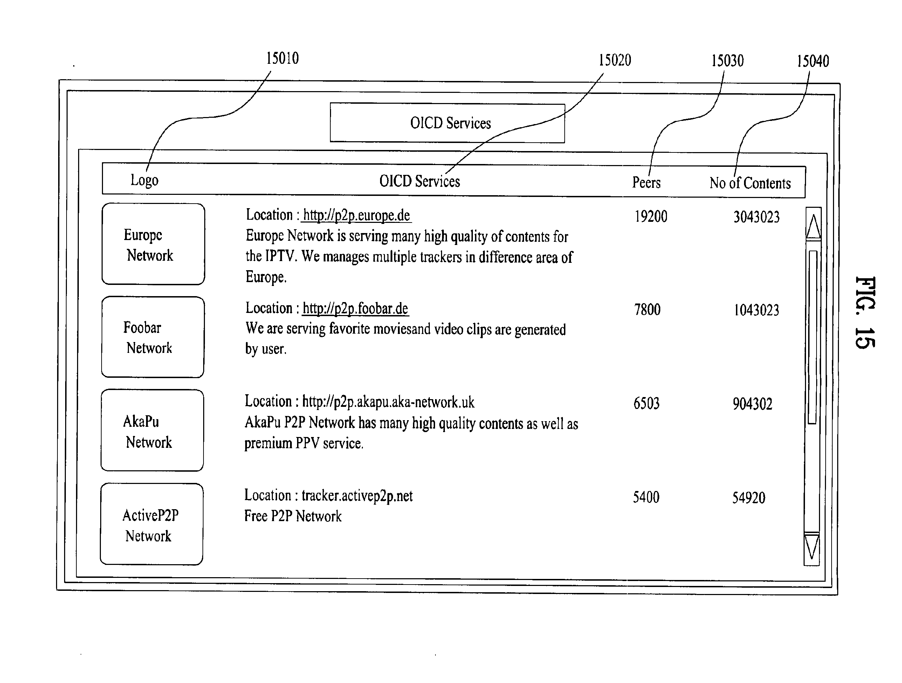

FIG. 15 shows a user interface (UI) for providing OICD provider information according to one embodiment of the present invention.

The receiver obtains OICD discovery information through SD&S information, and displays information about the OICD provider as shown in FIG. 15.

The UI of FIG. 15 provides a logo 15010 of OICD providers capable of being used by the user, "OICD services" 15020 indicating OICD provider description information including location and description of the OICD provider, "Peers" 15030 indicating the number of peers connected to the corresponding OICD provider, and "No Of Contents" 15040 indicating the number of contents capable of being used through the corresponding OICD provider.

The service provider may provide information about one or more OICD providers as IPTV additional information. As shown in FIG. 15, the user views information of the OICD provider (or OICD service provider) capable of being used by the user and selects which one of P2P networks is to be used.

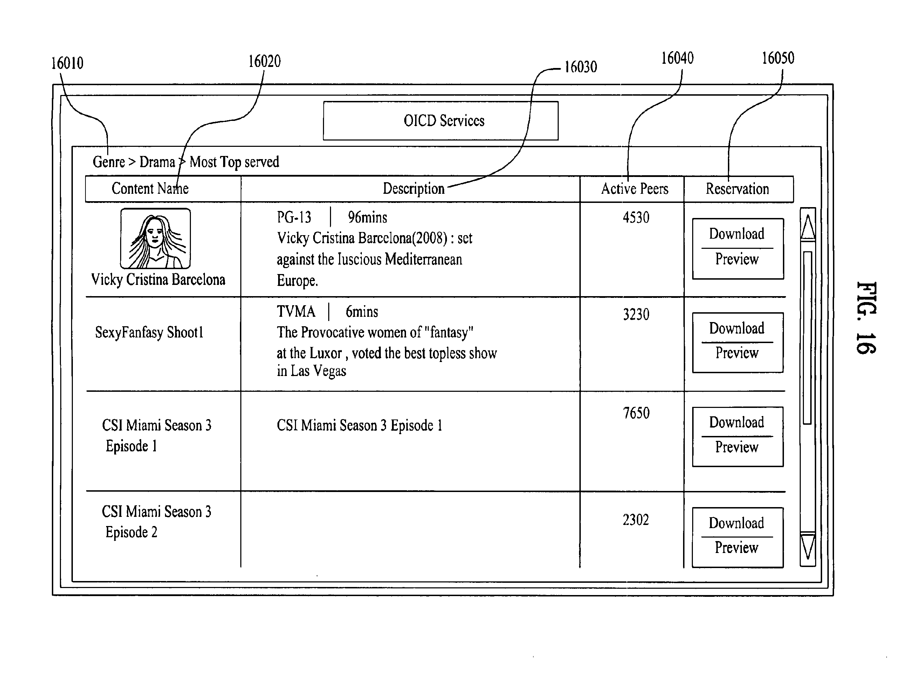

FIG. 16 shows a user interface (UI) for providing information of the OICD provider service according to one embodiment of the present invention.

If the user selects the OICD provider through the UI shown in FIG. 15, the UI of FIG. 16 may be provided from the OICD provider.

As can be seen from the UI of FIG. 16, the corresponding OICD provider classifies services according to individual genres. Content information is provided through the menu 16010 of the most popular content pertaining to a drama genre. As can be seen from FIG. 16, the OICD provider provides a variety of content information, for example, "Content Name" 16020 indicating a content title, "Description" 16030 indicating content description 16030, "Active Peers" 16040 indicating the number of connected peers each downloading content, and "Reservation" 16050 indicating information as to whether content is downloaded and information as to whether the preview service is provided.

In order to provide content information for facilitating the user selection, the tracker has to transmit information regarding the requested peers and the requested content information using the hash code to the receiver. In one embodiment, the above-mentioned function can be implemented as the standardized method using the above-mentioned tracker URI.

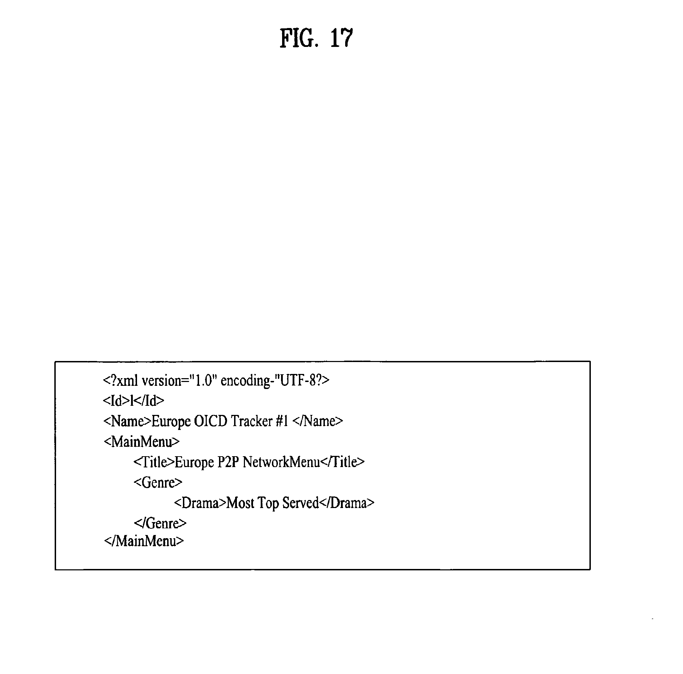

FIG. 17 shows XML format data of a main menu that is transmitted to provide menus of the OICD provider shown in FIG. 16 according to one embodiment of the present invention.

The receiver receives XML data shown in FIG. 17, and provides a variety of menus, for example, an OICD tracker title, a content title, genre information, etc.

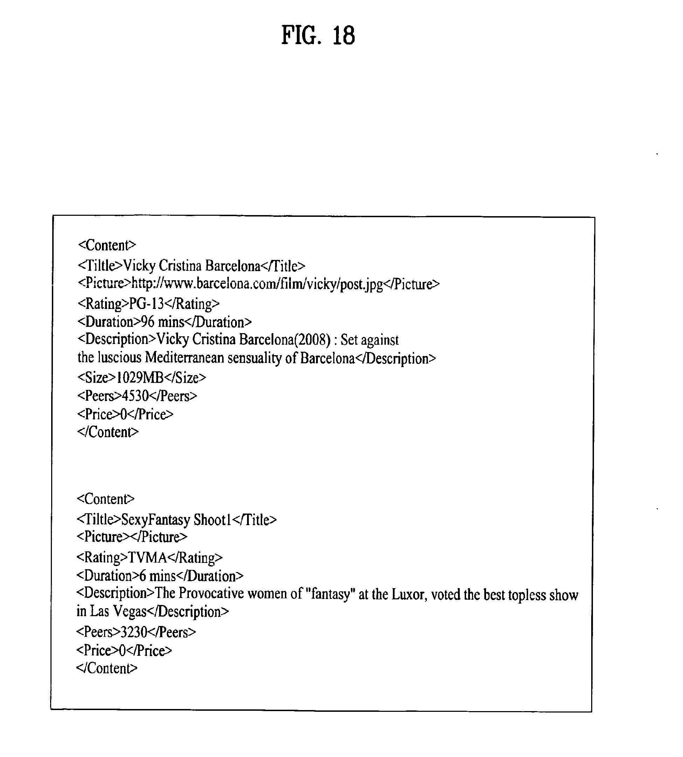

FIG. 18 shows XML format data of content information that is transmitted to provide content information of the OICD provider shown in FIG. 16 according to one embodiment of the present invention.

The receiver receives XML data shown in FIG. 18, and provides information (See FIG. 16) capable of being provided from the OICD provider.

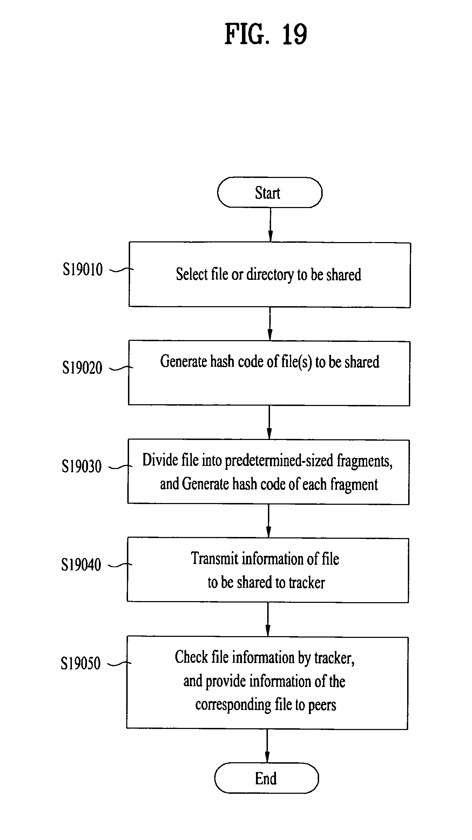

FIG. 19 is a flowchart illustrating a process for enabling the receiver to generate hash codes as well as to register content according to one embodiment of the present invention.

If the receiver connects to the P2P network through the OICD provider, the receiver may also be used as the OICD client (peer). In order to allow the OICD client to share its own files with other OICD clients (peers or receivers), a hash code indicating unique information of each file to be shared must be generated to identify each file.

The receiver selects a file to be shared or a directory including the shared file at step S19010, and generates hash codes of files located in either the selected file or the selected directory at step S19020.

In this case, the receiver divides each file into a plurality of predetermined-sized parts according to the file size, and generates hash codes of all divided parts at step S19030. In accordance with one embodiment of the present invention, hash code generation may use the SHA-1 algorithm. The SHA-1 algorithm can generate only one value of 20 bytes (i.e., 160 bits) in association with mass storage data. The receiver divides one mass storage file into a plurality of predetermined-sized parts so as to generate a hash code. In other words, the receiver divides one mass storage file into a plurality of predetermined-sized pieces, and each piece may generate an independent hash code.

The receiver transmits content information regarding the file to be shared to the tracker at step S19040. For example, information about the shared file may include a file name, a file publisher, time record (date, time, etc.) of each file, generated hash code(s), and connection location information (e.g., IP address or port information).

The tracker checks information about the received file, and transmits the received information and accessible location information to peers at step 19050.

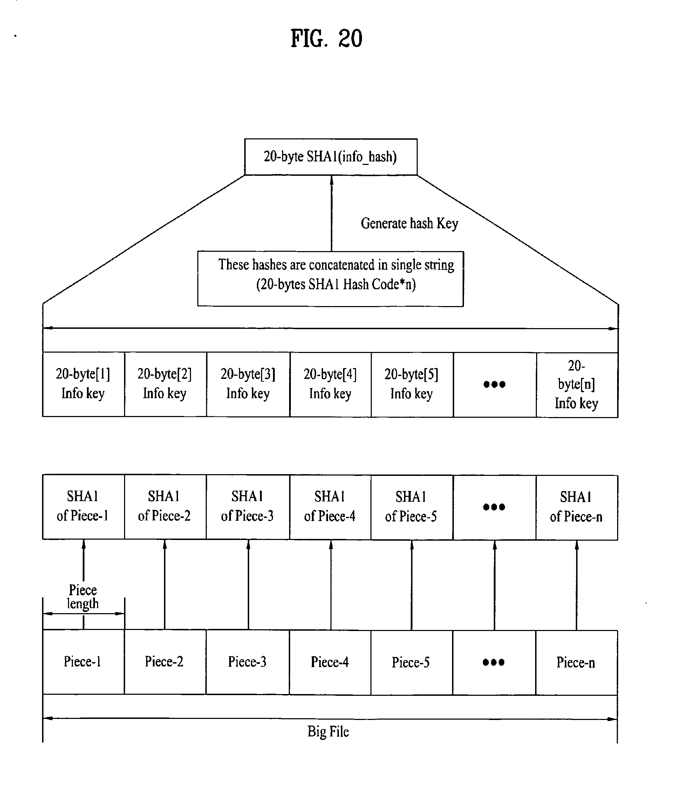

FIG. 20 is a conceptual diagram illustrating a process for generating hash codes according to one embodiment of the present invention.

In FIG. 20, one file to be shared is divided into n pieces (Piece-1, Piece-2, ..., Piece-n). The SHA-1 algorithm is applied to each file piece, so that n 20-byte[n] info keys are generated. If n 20-byte[n[ info keys are generated, each generated value is used as a key for representing each piece, such that one sentence (character string) is comprised of individual keys. For example, if n pieces exist, a character string corresponding to the (20-byte x n) bytes is generated. Thereafter, a unique hash key is generated using the SHA-1 algorithm on the basis of the generated character string.

The final hash key may be referred to as an info key. The info key is a representative key of the file to be shared, such that the info key is used to search for data using the tracker. Information registered in the tracker may be searched by other peers. The tracker compares a file name, a file size, a hash code, etc. with others, such that it can determine whether or not files of individual peers are identical to each other. Information regarding the determined file is provided as user-searched information. The number of peers having the same file is summed so that the summation result may be provided as shown in FIG. 16.

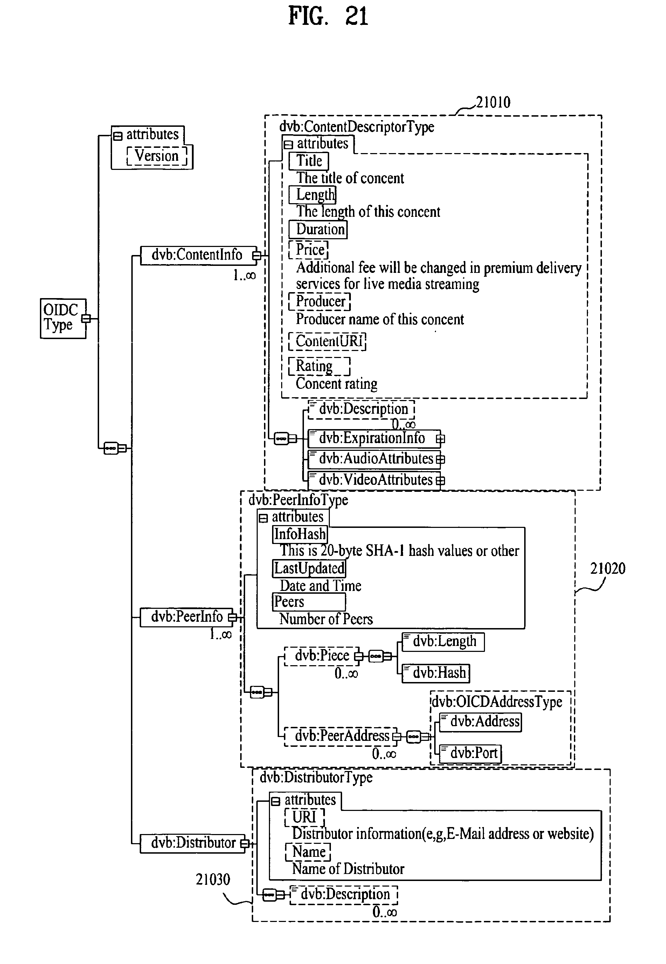

FIG. 21 shows a structure of OICD type information transmitted through content searching of the receiver according to one embodiment of the present invention.

As previously stated in the search content (4), the receiver may search for content through the OICD provider using the HTTP protocol. For example, if the receiver transmits a request for searching for the keyword, content information and detailed peer information need to be transmitted to the receiver using the XML structure. IN accordance with the present embodiment, OICD type information shown in FIG. 21 can be transmitted as information that is transmitted as the search result to the receiver.

Content information (Contenlnfo) 21010 includes content information. The content information (Contentlnfo) 21010 may include content genre, video and audio playback information, content expiration time information, and content price information. The content expiration time information may include date and time information of a content provision duration in which valid content is provided. The content price information may include price information provided for an exemplary case in which content is purchased using Digital Rights Management (DRM).

Peer information (Peerlnfo) 21020 may include a variety of information about peers each downloading the corresponding content. For example, the peer information (Peerlnfo) 21020 may include the number of peers, peer location information, update information, etc.

The distributor information 21030 may include a URI that is capable of receiving necessary information through HTTP when the DRM system or content is simultaneously deleted. When using a P2P network for a PC, content can be generally reproduced and deleted by the user. In contrast, when using the IPTV, the distributor information 21030 may increase user convenience or conduct cost payment using the DRM system when a predetermined time is automatically expired or the user desires to use additional content.

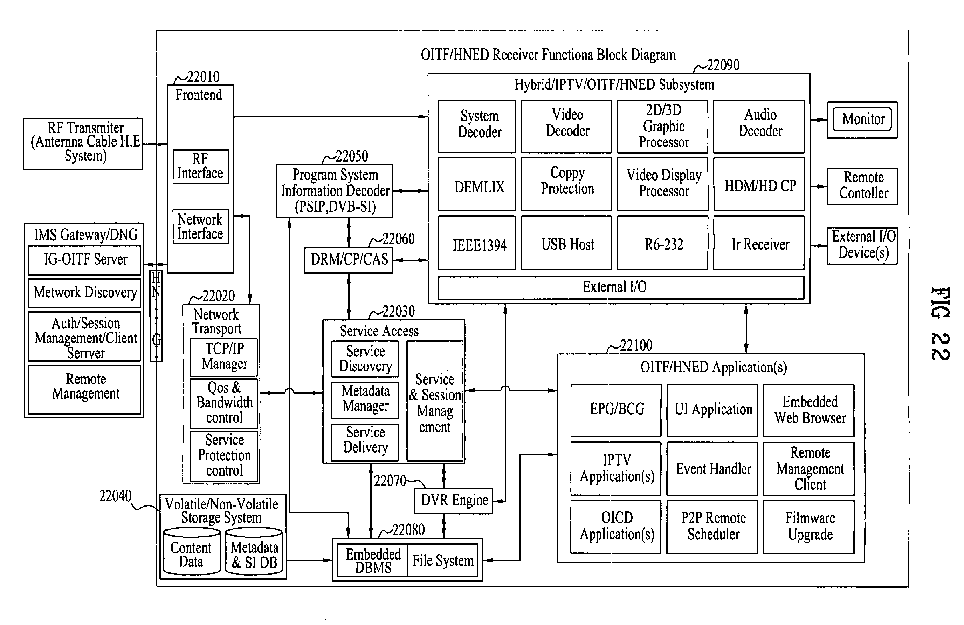

FIG. 22 is a block diagram illustrating an IPTV receiver according to one embodiment of the present invention.

Referring to FIG. 22, the IPTV receiver includes a Frontend 22010, a network transport unit 22020, a service access unit 22030, a storage unit (volatile/non-volatile storage system) 22040, a PSI (Program System Information) decoder 22050, an authentication unit (DRM/CP/CAS) 22060, a DVR engine 22070, an embedded DBMS/File system unit 22080, a system controller (Hybrid/OITF/HNED subsystem) 22090, and application unit (OTIF/HNED Applications) 22100.

The Frontend 22010 includes an RF interface for receiving digitized RF signals, and a network interface for transmitting/receiving IP (Internet Protocol) packets.

The network transport unit 22020 includes a TCP/IP manager, a QoS & bandwidth control unit, and a service protection control unit. The TCP/IP manager performs IP packet delivery, and performs the IP packet classification to the proper IP manager. The QoS & bandwidth control unit performs bandwidth adjustment in response to services, and adjusts the IPTV service quality. The service protection control unit secures communication of the receiver so that it can protect logical and physical connection to the service provider and other UEs. In case of using the QoS & bandwidth control unit according to the present embodiment, the bandwidth may be controlled by the IPTV application or the service provider. Specifically, the QoS & bandwidth Control unit may block connection of other peers or other systems.

The service access unit 22030 includes a service discovery unit, a metadata manager, a service and session management unit, and a service delivery unit. The service discovery unit performs IP service discovery (searching) through a bidirectional IP network, and provides service selection information. The metadata manager manages XML data and stores it in the file system. The service & Session management unit is used to select or control a communication session and a service such as the live broadcasting using IGMP (Internet Group Management Protocol) or RTCP (Real-time Transport Control Protocol). The service delivery unit receives content from the content server and processes real-time streaming data. In the present embodiment, the service delivery unit may search for user-selected content in another peer or IPTV receiver and receive the retrieved content.

The storage unit (volatile/non-volatile storage system) 22040 includes a content database (DB) for storing content received through the content download system, and the metadata & SI DB for storing service discovery information and service-associated metadata.

The PSI decoder 22050 establishes system information (SI) for the demultiplexer or a PID for the program system information (PSI), and decodes the extracted system information and program system information. In one embodiment, the decoded system information and program information may include SD&S information and OICD discovery information contained in the SD&S information.

The authentication unit (DRM/CP/CAS) 22060 stores the license or key for content, and performs content authentication through the decoding or descrambling process according to the use authority of the encrypted content.

The DVR engine 22070 records and plays the live streaming content. In addition, the DVR engine 22070 may collect metadata for the recorded content capable of being provided to the user.

The embedded DBMS/File system unit 22080 manages electronic program schedule data, XML data, etc.

The system controller (Hybrid/OITF/HNED subsystem) 22090 includes a system decoder for decoding MPEG-2 TS packet and IP packet, a demultiplexer (DEMUX) for demultiplexing the received signal and packet under the control of the PSI decoder, and an audio decoder for decoding a video element. In addition, the system controller 22090 includes an IEEE1394 support unit, a copy protection unit, a USB host, a 2D/3D graphics processor, a video display processor, an RS-232 support unit, a HDMI/HDCP support unit, an external I/O (Input/Output) unit, and an infrared (IR) receiver. The IEEE1394 support unit supports an IEEE 1394 interface. The copy protection unit supports a USB interface. The 2D/3D graphics processor displays a caption and a UI, controls OSD and 2D graphic data, and performs 3D data rendering. The video display processor performs video filtering, controls/processes video or still images. The RS-232 support unit supports the RS-232 interface for the PC compatible system. The HDMI/HDCP support unit supports the HDMI output and HDCP content protection function. The external I/O unit filters inner packets of the device or blocks streams, such that it controls flow of I/O data. The infrared (IR) receiver receives input signals of a user input device such as a remote controller, and analyzes and demodulates the received signals.

The application unit 22100 includes an EPG/BCG display for displaying XML data and content information, and a UI application unit that controls a UI displayed on the screen by controlling a TV system and receives a user input signal through a user input means or a display panel. In addition, the application unit 22100 may further include an OICD application unit, a remote management client, a P2P remote scheduler, a firmware upgrade unit, an event handler, an embedded Web browser. The OICD application unit transmits P2P downloadable content through Internet connection. The remote management client for enabling the user to control the application and system entity. The P2P remote scheduler connects to the OITF (Open Internet Terminal Function) by the user, searches for content by connecting to the OICD network, and downloads desired content. The firmware scheduler searches for the latest firmware software, and provides the software to the user, such that firmware is upgraded. The event handler can manage messages or events received from the service provider or protocol, and determine messages or events to be transmitted. The embedded Web browser renders the open Internet content on the screen.

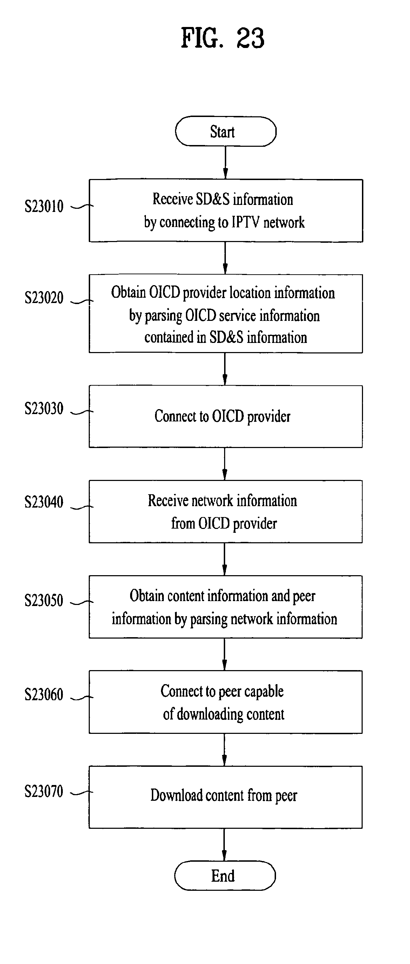

FIG. 23 is a flowchart illustrating a method for downloading content of an IPTV receiver according to one embodiment of the present invention.

Referring to FIG. 23, the IPTV receiver connects to the IPTV network using the network interface, such that it receives SD&S information at step S23010. The operation for receiving the SD&S information by the IPTV receiver is conceptually identical to those of FIG. 2. The received SD&S information has the same structure as in FIGS. 4, 5, 12 and 13, and includes OICD service information. The OICD service information has the above-mentioned structure as in FIG. 6. In one embodiment, the OICD service information may include OICD provider information and OICD service information.

The IPTV receiver parses OICD service information contained in SD&S information using the PSI decoder, such that it obtains location information of the OICD provider at step S23020. The OICD service information includes information of the OICD provider acting as the P2P tracker providing P2P network information. Specifically, the OICD service information includes location information of the OICD provider capable of being accessed by the IPTV receiver. The location information of the OICD provider may be provided as IRU, IP address, port information, etc. The OICD service information provides location information of several OICD providers to the user, such that the users can gain access to his or her selected OICD provider.

The IPTV receiver connects to the OICD provider using the service access unit at step S23020. The IPTV receiver can connect to the OICD provider using the obtained OICD provider location information.

The IPTV receiver receives network information from the connected OICD provider using the network interface at step S23040. The network information includes content information associated with the downloadable content and peer information associated with the content-downloadable peer. The OICD provider manages a database (DB) of the P2P network, and provides the content information and peer information to the connected IPTV receiver.

The IPTV receiver parses the received network information using the PSI decoder such that it obtains content information and peer information at step S23050. The content information may include a downloadable content name, the length of content, the list of contents, content description, and a unique hash code for content identification. If necessary, the following description may include all parts of the above-mentioned contents. Peer information may include location information of a peer capable of downloading content, the number of peers, a peer connection state, etc. If necessary, the following description may include all parts of the above-mentioned peer information.

The IPTV receiver connects to a peer capable of downloading content using the service access unit at step S23060. The IPTV receiver includes specific content using the obtained content information and peer information, and connects to a peer that is capable of downloading this content.

The IPTV receiver downloads content from the connected peer using the network interface at step S23070. The IPTV receiver identifies and downloads content using the above-mentioned hash code as described above. Although the entirety of the file may be downloaded in one peer, it should be noted that some parts of the file identified by the hash code may be received from several peers.

The concept of FIG. 23 may also be applied to FIGS. 1 to 22. Although the above-mentioned description is not repeatedly explained in the present invention, it should be noted that the concepts of FIGS. 11 to 22 may also be applied to detailed information of the steps of FIG. 23 as necessary.

The present invention includes P2P discovery information in SD&S information, such that the IPTV receiver can obtain information of the P2P provider and can use the P2P service using the obtained information. In addition, the P2P network service provider is defined such that the P2P provider information can be displayed on the screen.

The present invention defines the P2P service such that the P2P service provider can inform the IPTV receiver of information of several P2P trackers. As a result, from the viewpoint of the IPTV receiver, the IPTV receiver can automatically connect to a specific tracker without receiving a separate input or selection signal from the user. In addition, when receiving the P2P service, TrackerURI is defined in such a manner that a variety of queries capable of searching for and downloading content after accessing the P2P tracker can be used.

The present invention provides the screen display function using P2P service information such that the user can recognize which information is contained in the P2P service. In other words, the uppermost menu information provided from the P2P provider is received in XML or XHTML format, and the received information is displayed on the screen. The user can easily select the service displayed on the screen, and use the selected service.

The present invention defines the P2PContentType that allows the tracker to inform the receiver of the content and peer information for the P2P service such that the resultant information can be transmitted. The IPTV receiver may receive the content and peer information from the tracker in association with the user-selected content, and may request content or data needed for the peer.

The method disclosed in the present invention may be implemented in the form of program commands executable by a variety of computer means, and recorded on a computer-readable recording medium. The computer-readable recording medium may include program commands, data files, data structures, etc. individually or in combination. The program commands recorded on the medium may be ones specially designed and configured for the present invention or ones known and available to those skilled in computer software. Examples of the computer-readable recording medium include magnetic media such as a hard disk, a floppy disk and a magnetic tape, optical media such as a compact disc read only memory (CD-ROM) and a digital versatile disc (DVD), magnetooptical media such as a floptical disk, and hardware devices specially configured to store and execute program commands, such as a ROM, a random access memory (RAM) and a flash memory. Examples of the program commands include high-level language code that may be executed by a computer using an interpreter, etc., as well as machine language code such as that produced by a compiler. The above-stated hardware devices may be configured to operate as one or more software modules to perform the operation of the present invention, and vice versa.

Although the present invention has been described in conjunction with the limited embodiments and drawings, the present invention is not limited thereto. Those skilled in the art will appreciate that various modifications, additions and substitutions are possible from this description. Therefore, the scope of the present invention should not be limited to the description of the exemplary embodiments and should be determined by the appended claims and their equivalents.

### Mode for Invention

Various embodiments have been described in the best mode for carrying out the invention.

### Industrial Applicability

As apparent from the above description, embodiments of the present invention may be wholly or partially applied to a digital broadcasting system.

## Claims

1. A method for downloading content by an IPTV receiver comprising:
receiving SD&S (Service Discovery and Selection) information including OICD (Open Internet Content Delivery) service information by connecting to an IPTV network;
obtaining location information of an OICD provider by parsing the OICD service information; and
connecting to the OICD provider through the location information of the OICD provider,
wherein the OICD service information includes location information of the OICD provider that provides network information capable of downloading content using a peer-to-peer (P2P) scheme.

2. The method according to claim 1, wherein the network information includes content information associated with downloadable content and peer information associated with downloadable peer.

3. The method according to claim 2, further comprising:
receiving the network information from the OICD provider;
obtaining the content information and the peer information by parsing the network information;
connecting to a peer capable of downloading the content using the content information and the peer information; and
downloading the content from the peer.

4. The method according to claim 1, wherein the location information of the OICD provider includes URI (Uniform Resource Identification) information of the OICD provider.

5. The method according to claim 2, wherein the content information includes a unique hash code associated with content.

6. The method according to claim 2, wherein the peer information includes location information of the peer.

7. An IPTV receiver comprising:
a network interface for receiving SD&S (Service Discovery and Selection) information including OICD (Open Internet Content Delivery) service information by connecting to an IPTV network;
a PSI (Program System Information) decoder for obtaining location information of an OICD provider by parsing the OICD service information; and
a service access unit for connecting to the OICD provider through the location information of the OICD provider,
wherein the OICD service information includes location information of the OICD provider that provides network information capable of downloading content using a peer-to-peer (P2P) scheme.

8. The IPTV receiver according to claim 7, wherein the network information includes content information associated with downloadable content and peer information associated with downloadable peer.

9. The IPTV receiver according to claim 8, wherein:
the network interface further receivies the network information from the OICD provider;
the PSI decoder further obtains the content information and the peer information by parsing the network information;
the service access unit further connects to a peer capable of downloading the content using the content information and the peer information; and
the network interface further downloads the content from the peer.

10. The IPTV receiver according to claim 7, wherein the location information of the OICD provider includes URI (Uniform Resource Identification) information of the OICD provider.

11. The IPTV receiver according to claim 8, wherein the content information includes a unique hash code associated with content.

12. The IPTV receiver according to claim 8, wherein the peer information includes location information of the peer.
